# EUROPEAN PATENT APPLICATION

(11) **EP 3 396 554 A1**
(43) Date of publication of application: **31.10.2018**
(21) Application number: 18166995.3
(22) Date of filing: 12.04.2018
(51) Int. Cl.: G06F 11/14

(54) **BACKUP CONTROL METHOD AND BACKUP CONTROL DEVICE**

(30) Priority: 24.04.2017 JP 2017085259
(71) Applicant: FUJITSU LIMITED, Kanagawa 211-8588 (JP)
(72) Inventor: Suzuki, Keisuke, Kanagawa, 211-8588 (JP); Takahashi, Ryohei, Kanagawa, 211-8588 (JP); Tomiyama, Yoshihide, Kanagawa, 211-8588 (JP)
(74) Representative: Hoffmann Eitle

(57) **Abstract**

A backup control method includes receiving a plurality of pieces of data transmitted from a plurality of data storage devices, classifying the plurality of pieces of data into respective data groups in accordance with the plurality of data storage devices of transmission sources, generating first compressed data by compressing one or more pieces of data classified into a first data group, and transmitting the first compressed data to a backup device storing backups.

## Description

### TECHNICAL FIELD

The embodiments discussed herein are related to backup techniques.

### BACKGROUND ART

In a cloud system used by a plurality of tenants, backup processing in which a data storage server transfers its stored data to a backup server at predetermined time is performed. However, if a backup is carried out concentratedly on a certain time slot, the communication load between the data storage server and the backup server becomes unbalanced depending on a time slot. Thus, it is requested to efficiently perform a backup and to improve the use efficiency of the resources.

As a related technique, a technique in which a main system and a backup system are connected by a network via a gateway server, and the gateway server temporarily stores equivalent important data is proposed.

Also, a data relay server that reads data from a storage server in accordance with a backup request received from a backup device and transfers the read data to the backup device is proposed.

Also, digital assets that are not frequently used are retained in a storage space, and thus a technique for compressing data at the time of archiving the data is proposed.

Also, a data processing apparatus that stores information regarding storages grouped correspondingly to businesses is proposed.

For example, related techniques are disclosed in Japanese Laid-open Patent Publication No. 2009-245248, Japanese Laid-open Patent Publication No. 2006-251936, Japanese National Publication of International Patent Application No. 2002-538553, and Japanese Laid-open Patent Publication No. 5-173873.

### SUMMARY

### TECHNICAL PLOBLEM

It is thought that at the time of backing up a data group, a backup-target data group is classified into a plurality of groups, and compression is performed for each group, and the compressed data group is stored in a backup server so that a backup is carried out efficiently. It is thought that when the backup-target data group is restored, the compressed group including a data group that is requested to be restored is decompressed.

However, by the related-art technique, when data is compressed for each group, if data that is a decompression target (restoration target) and data that is not a decompression target are mixed in a group, a data group that is not a decompression target is also decompressed at the time of restoration.

### SOLUTION TO PROBLEM

According to an aspect of the invention, a backup control method includes receiving a plurality of pieces of data transmitted from a plurality of data storage devices, classifying the plurality of pieces of data into respective data groups in accordance with the plurality of data storage devices of transmission sources, generating first compressed data by compressing one or more pieces of data classified into a first data group, and transmitting the first compressed data to a backup device storing backups.

### ADVANTAGEOUS EFFECTS OF INVENTION

According to one aspect, it is possible to suppress decomposition of the compressed data group that is not a decompression target at the time of decompressing a compressed data group.

### BRIEF DESCRIPTION OF DRAWINGS

FIG. 1 is a diagram illustrating an example of the overall configuration of a system according to an embodiment.
FIG. 2 is a diagram illustrating an example in which DBs that are not decompression targets are decompressed and transmitted.
FIG. 3 is a diagram illustrating an example of a relay server.
FIG. 4 is a diagram illustrating an example of backup management information.
FIG. 5 is a diagram illustrating an example of the corresponding relationship between DBs and data storage servers.
FIG. 6 is a diagram illustrating an example of restoration management information.
FIG. 7 is a flowchart illustrating an example of the flow of reception processing of the relay server.
FIG. 8 is a flowchart (1 of 2) illustrating an example of the flow of backup processing of the relay server.
FIG. 9 is a flowchart (2 of 2) illustrating an example of the flow of backup processing of the relay server.
FIG. 10 is a flowchart illustrating an example of the flow of restoration processing of the relay server.
FIG. 11 is a flowchart illustrating an example of the flow of deletion processing of a DB in a restoration data area.
FIG. 12 is a diagram illustrating an application example of the relay server according to the embodiment.
FIG. 13 is an explanatory diagram of the hardware configuration of the relay server.

### DESCRIPTION OF EMBODIMENTS

### <Example of the overall configuration of a system according to an embodiment

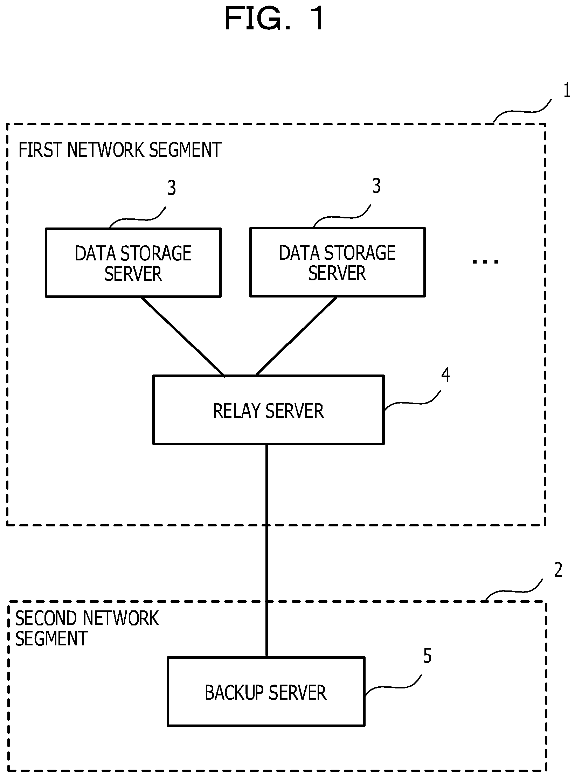

In the following, a description will be given of an embodiment with reference to the drawings. FIG. 1 is a diagram illustrating an example of the overall configuration of a system according to an embodiment. The system according to the embodiment includes a first network segment 1 and a second network segment 2.

The first network segment 1 includes a plurality of data storage servers 3 and a relay server 4. The second network segment includes a backup server 5. The second network segment may include a plurality of backup servers 5. The data storage server 3 is an example of the first data storage device. The relay server 4 is an example of the information processing apparatus. The backup server 5 is an example of the second data storage device.

The data storage server 3 stores data used by a user. It is assumed that the plurality of data storage servers 3 are individually separate devices. When the data storage server 3 backs up data, the data storage server 3 transmits the data group of a backup target to the relay server 4. In the present embodiment, it is assumed that the data group of a backup target is DataBases (DBs). The data group of a backup target may be a plurality of files, or the like.

The relay server 4 compresses the DBs of the transmitted backup target for each group and transmits the group of compressed DBs to the backup server 5. In the following, a compressed DB for each group is sometimes referred to as compressed data.

Also, when the relay server 4 receives a restoration request from the data storage server 3, the relay server 4 obtains compressed data including the DBs of the restoration target from the backup server 5. The relay server 4 decompresses the obtained compressed data and transmits the decompressed data to the data storage server 3 of the transmission source of the restoration request.

The backup server 5 stores the compressed data received from the relay server 4. Also, the backup server 5 may use, for example, RAID (Redundant Arrays of Inexpensive Disks) in order to improve security.

In the network configuration illustrated in FIG. 1, the communication bandwidth between the first network segment 1 and the second network segment 2 is sometimes narrower than the communication bandwidth in the first network segment 1. In this case, in order to reduce the communication delay at the time of backup and restoration, it is desirable to reduce the amount of communication between the relay server 4 and the backup server 5.

### <Example in which a DB that is not a decompression target is decompressed and transmitted>

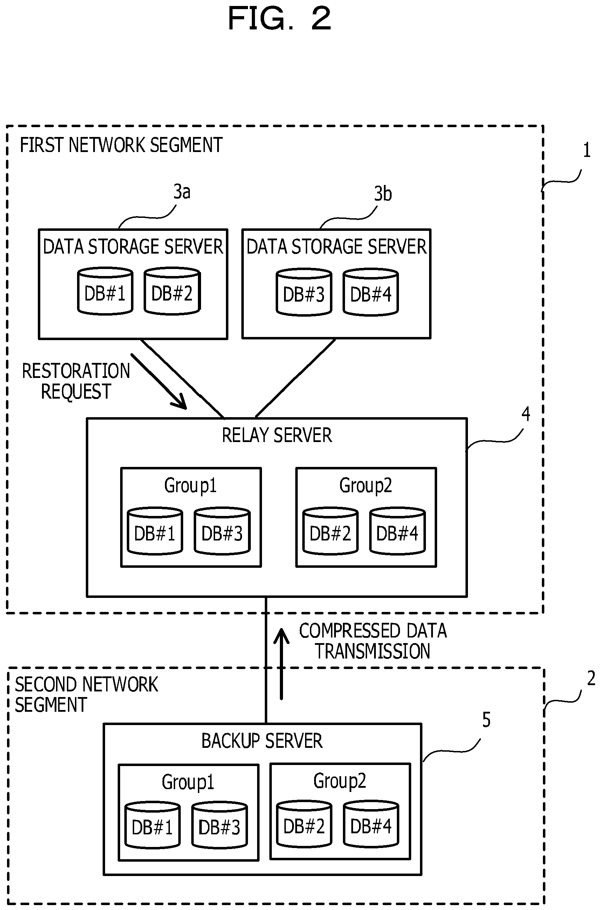

FIG. 2 is a diagram illustrating an example in which DBs that are not decompression targets are decompressed and transmitted. In FIG. 2, a description will be omitted of the same configuration as that in FIG. 1. A data storage server 3a and a data storage server 3b correspond to the data storage servers 3 in FIG. 1. The data storage server 3a stores DB#1 and DB#2. The data storage server 3b stores DB#3 and DB#4.

It is assumed that backup processing of the individual DBs in the data storage server 3a and the data storage server 3b has been performed in backup processing, and as a result, the backup server 5 stores the DBs compressed for each group by the relay server 4.

In this example, it is assumed that the DBs are transmitted to the relay server 4 in order of DB#1, DB#3, DB#2, and DB#4, and the relay server 4 has grouped the DBs in order of reception, and as a result, GROUP1 includes DB#1 and DB#3, and GROUP2 includes DB#2 and DB#4.

It is assumed that a failure has occurred in the data storage server 3a after the backup processing, and the relay server 4 has received a restoration request that specifies DB#1 and DB#2 from the data storage server 3a. The relay server 4 obtains compressed data corresponding to GROUP1 and GROUP2 from the backup server 5 in order to restore DB#1 and DB#2.

In this example, DB#3 and DB#4 are not the DBs of the restoration target, but belong to the same group as the respective restoration targets of DB#1 or DB#2, and are compressed together. Accordingly, transmission from the backup server 5 and decompression are carried out. That is to say, transmission and decompression of the DBs that are not restoration targets (decompression targets) are performed.

### <Example of relay server>

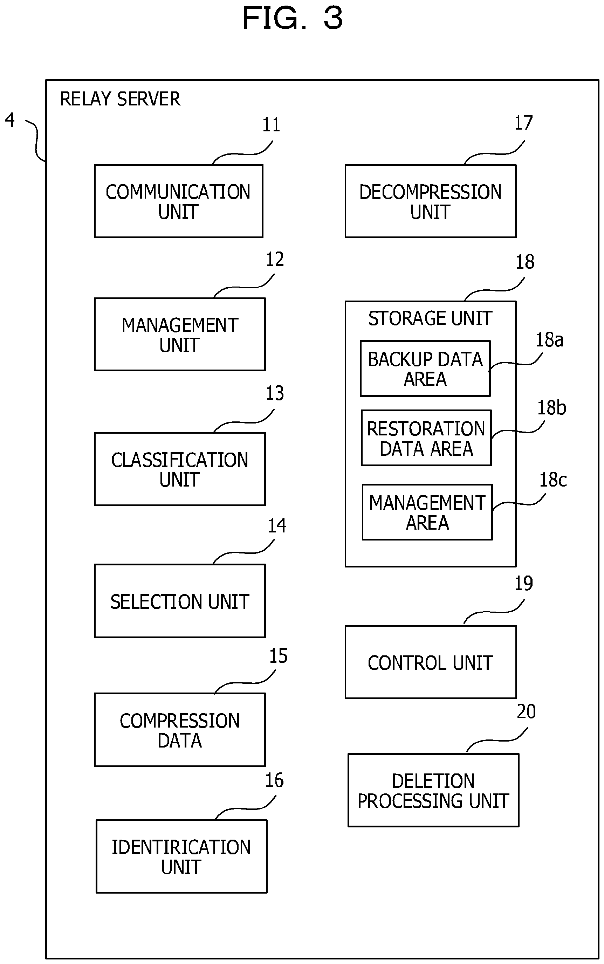

FIG. 3 is a diagram illustrating an example of the relay server 4. The relay server 4 includes a communication unit 11, a management unit 12, a classification unit 13, a selection unit 14, a compression unit 15, an identification unit 16, a decompression unit 17, a storage unit 18, a control unit 19, and a deletion processing unit 20.

The communication unit 11 receives a plurality of backup target DBs from a plurality of data storage servers 3 and transmits the DBs that are compressed for each group by the processing described later to the backup server 5. The communication unit 11 is an example of the reception unit and the transmission unit.

The communication unit 11 receives a restoration request from the data storage server 3 in which a failure has occurred. The communication unit 11 then receives compressed data including the DBs of the restoration target from the backup server 5 and transmits the DBs of the restoration target that have been decompressed by the processing described later to the data storage server 3, which is the transmission source of the restoration request.

The management unit 12 performs update processing on the backup management information, which is the management information concerning backup, and the restoration management information, which is the management information concerning restoration processing. A detailed description will be given later of the backup management information and the restoration management information.

The classification unit 13 classifies the plurality of DBs of the backup target, which have been received from the data storage server 3, into respective groups for each data storage server 3 of the transmission source of the plurality of respective DBs.

The selection unit 14 refers to the backup management information, calculates the number of DBs for each group and the amount of data, and obtains the reception time from the data storage server 3 for each DB. The selection unit 14 then selects a compression target group based on, for example, the number of DBs for each group, the amount of data for each group, or the reception time for each DB.

For example, if there is a group having the number of DBs larger than a first threshold value among the classified groups, the selection unit 14 may select a group having the largest number of DBs among the classified groups as a compression target group.

For example, if there is a group having the total amount of data of the DBs larger than a second threshold value among the classified groups, the selection unit 14 may select a group having the largest total amount of data of the DBs among the classified groups as a compression target group.

The selection unit 14 may select, for example, a group including a backup target DB having the oldest reception time from the data storage server 3 as a compression target group.

The compression unit 15 compresses one or a plurality of DBs that are classified into respective groups for each group. The compression unit 15 compresses, for example, one or a plurality of DBs in a group selected by the selection unit 14 and creates one piece of compressed data for one group.

If the communication unit 11 receives a restoration request from the data storage server 3, the identification unit 16 refers to the backup management information and identifies a group including the restoration target DBs.

The decompression unit 17 obtains a group identified by the identification unit 16 from the backup server 5 and decompresses the obtained group. The decompression unit 17 stores the DBs obtained by decompressing the compressed data in a restoration data area 18b.

The storage unit 18 includes a backup data area 18a, the restoration data area 18b, and a management area 18c. The backup data area 18a stores the backup target DBs received from the data storage server 3 and the compressed DBs of the grouped backup target DB. The restoration data area 18b stores the compressed data including the restoration target DB, which has been received from the backup server 5, and decompressed DBs of the received compressed data. The management area stores various kinds of management information, such as the backup management information, the restoration management information, and the like.

The control unit 19 performs various kinds of control of the relay server 4. If a predetermined period of time has elapsed from the transmission of the DBs of the restoration target to the data storage server 3, the deletion processing unit 20 deletes the DBs of the restoration target.

The relay server 4 may be a plurality of servers that virtually operate as one server. In that case, the data capacity of the storage unit 18 may be variable. For example, the data capacity of the storage unit 18 may be increased during a time slot having a large amount of backup processing, and the data capacity of the storage unit 18 may be decreased during a time slot having a small amount of backup processing. For example, the capacity of the storage unit 18 may be increased or decreased by an administrator who increases or decreases the number of servers that are allocated as the relay server 4.

### < Example of management information >

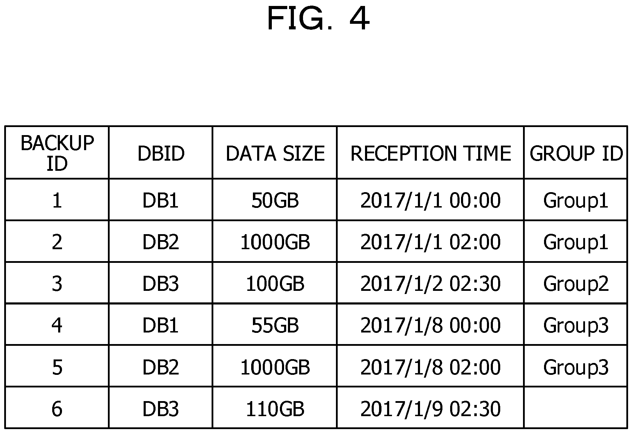

In the following, a description will be given of various kinds of management information stored in the management area 18c of the storage unit 18. The various kinds of management information is updated by the management unit 12. FIG. 4 is a diagram illustrating an example of backup management information.

The backup management information includes a backup ID, a DBID, a data (DB) size, reception time of a DB, and a group ID.

The backup ID is given to a backup target DB for each backup processing and is information for identifying a backup. For example, when the relay server 4 receives a DB transmitted by the data storage server 3, the management unit 12 sets a backup ID for each DB. That is to say, if the relay server 4 receives the same DB a plurality of times, individually different backup IDs are given.

The DBID is the identification information set for each DB in advance, and is given to a DB transmitted from the data storage server 3. The data size indicates the amount of data of a DB. The reception time is time when the relay server 4 has received a DB of the backup target from the data storage server 3.

The group ID is an ID that is set for each group when the classification unit 13 has classified DBs into respective groups. In this regard, before the classification unit 13 performs group classification, a group ID is blank. For example, FIG. 4 illustrates that a DB having a backup ID of 6 is already stored in the backup data area 18a, but the DB has not been subjected to group classification.

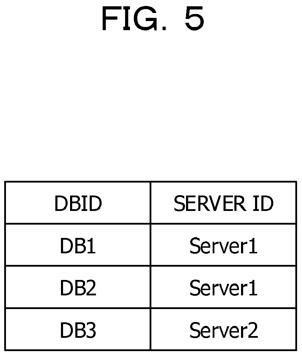

FIG. 5 is a diagram illustrating an example of the corresponding relationship between DBs and the data storage servers 3. In the management information illustrated in FIG. 5, a DBID and a server ID identifying a data storage server 3 that stores the DB are associated.

For example, if a server ID is given to a DB transmitted from a data storage server 3, the storage unit 18 has not to store the management information indicating a data storage server 3 associated with a DB as illustrated in FIG. 5. In that case, when the management unit 12 receives a backup target DB, the management unit 12 may record a server ID given to the received DB and the DBID in the backup management information (for example, FIG. 4).

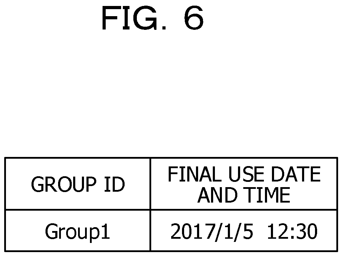

FIG. 6 is a diagram illustrating an example of the restoration management information. The restoration management information is information for managing data stored in the restoration data area 18b. As illustrated in FIG. 6, in the restoration management information, a group ID of the compressed data or the decompressed data stored in the restoration data area 18b and final use date and time are associated. When the management unit 12 has transmitted a DB of the restoration target to the data storage server 3, the management unit 12 records transmission date and time as final use date and time. In this regard, in the restoration management information, a DBID stored in the restoration data area 18b and final use date and time may be associated.

### <Example of the processing flow according to an embodiment

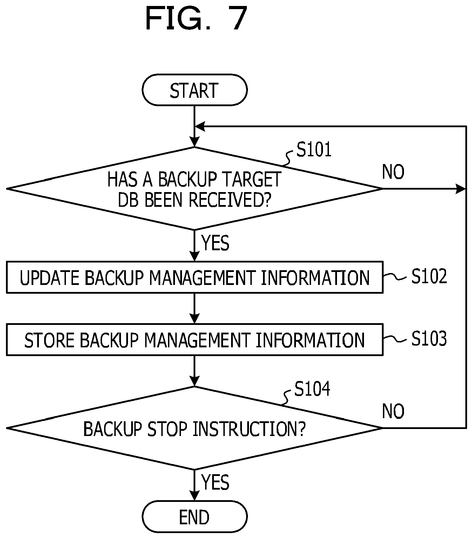

A description will be given of the processing flow of the relay server 4 according to the embodiment. FIG. 7 is a flowchart illustrating an example of the flow of reception processing of the relay server 4.

If the management unit 12 receives a backup target DB from the data storage server 3 (YES in step S101), the management unit 12 updates the backup management information (step S102). If the management unit 12 does not receive a backup target DB from the data storage server 3 (NO in step S101), the processing does not proceed to next step.

The management unit 12, for example, sets a backup ID, and records the set backup ID, the DBID given to the DB, the data size of the DB, and the reception time in the management information in association with one another. The management unit 12 may notify the data storage server 3 of the backup ID via the communication unit 11.

The control unit 19 stores the received backup target DB in the backup data area 18a of the storage unit 18 (step S103).

If the control unit 19 receives a backup stop instruction (YES in step S104), the control unit 19 terminates the processing. If the control unit 19 has not received a backup stop instruction (NO in step S104), the processing returns to step S101. For example, if abnormality occurs in the backup server 5, or the like, a backup stop instruction is transmitted from an administrator terminal not illustrated in FIG. 2 to the relay server 4.

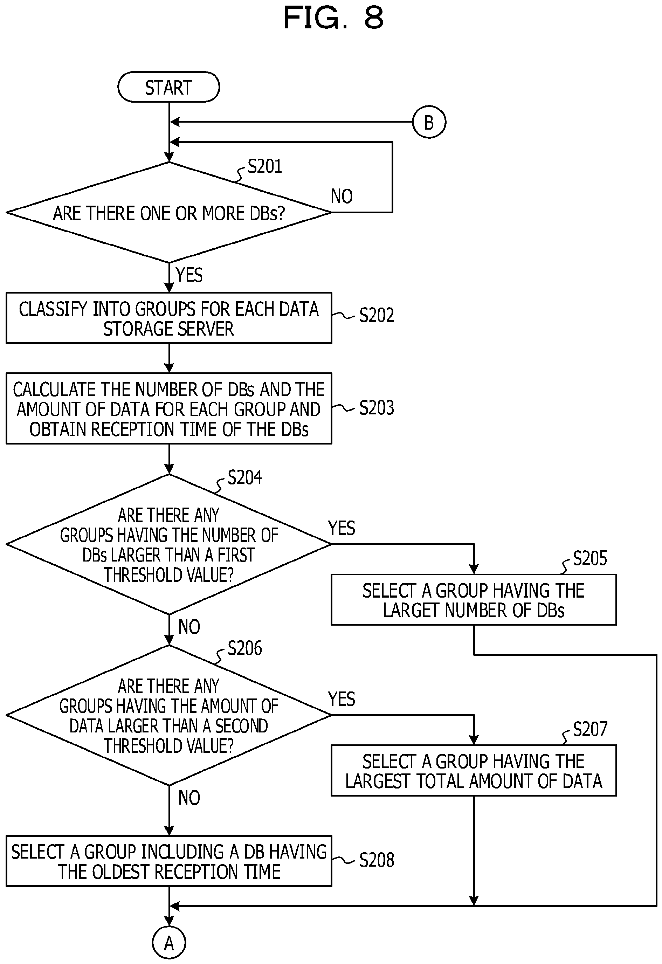

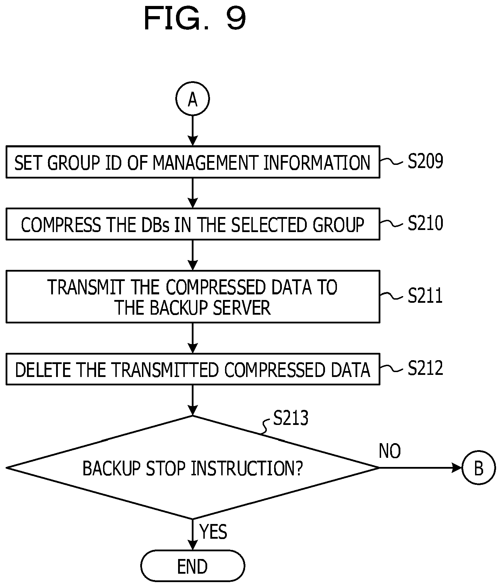

FIG. 8 and FIG. 9 are flowcharts illustrating an example of the flow of backup processing of the relay server 4. The relay server 4 performs, for example, the backup processing illustrated in FIG. 8 and FIG. 9 and the reception processing illustrated in FIG. 7 in parallel. The relay server 4 may perform the backup processing illustrated in FIG. 8 and FIG. 9 and the reception processing illustrated in FIG. 7 not in parallel but in sequence.

The classification unit 13 determines whether or not there are one or more backup target DBs before classification in the backup data area 18a of the storage unit 18 (step S201). If NO in step S201, the processing does not proceed to the next step.

If YES in step S201, the classification unit 13 classifies a plurality of DBs of the backup target received from the data storage server 3 into respective groups for each data storage server 3 of the transmission source of the plurality of DBs (step S202). The classification unit 13 refers to, for example, the management information illustrated in FIG. 5, identifies a data storage server 3 of the transmission source of the backup target DB, and classifies the DBs into respective groups for each data storage server 3.

The selection unit 14 calculates the number of DBs for each group and the total amount of data based on each information of the backup management information, and obtains the reception time from the data storage server 3 of each DB (step S203).

The selection unit 14 determines, for example, whether or not there are groups having the number of DBs larger than a first threshold value (step S204). If YES in step S204, the selection unit 14 selects a group having the largest number of DBs among the classified groups as a compression target group (step S205).

There is a high possibility that a DB is used for each user. Accordingly, if the number of DBs is large, there is a high possibility that many users use the DBs. Also, the backup server 5 according to the present embodiment uses a RAID, or the like, and thus has higher security than the relay server 4. Accordingly, the relay server 4 preferentially compresses a group having a large number of DBs and transmits the group to the backup server 5 so that it is possible to reduce the impact of abnormality, or the like of the relay server 4 on users. In this regard, if the relay server 4 has the same security as that of the backup server 5, the relay server 4 may omit the processing in step S204 and step S205.

If NO in step S204, the selection unit 14 determines, for example, whether or not there are groups having the total amount of data equal to or larger than a second threshold value (step S206). If YES in step S206, the selection unit 14 selects a group having the largest total amount of data among the classified groups as a compression target group (step S207).

If the amount of data in the backup data area 18a increases, an area for storing the backup target DB newly transmitted from the data storage server 3 might be insufficient. Accordingly, the relay server 4 preferentially compresses a group including DBs having a large total amount of data and transmits the group to the backup server 5 so that it is possible to reduce a chance of shortage in the free capacity of the storage unit 18.

In this regard, step S206 may be moved subsequently to step S203, and if NO in step S206, the processing may be moved to step S204. That is to say, the selection unit 14 may preferentially select a group having the total amount of data equal to or larger than the second threshold value than a group having the number of DBs equal to or larger than the first threshold value as a compression target group. In the relay server 4, for example, if the storage capacity of the storage unit 18 is smaller than a predetermined value, the selection unit 14 preferentially selects a group having the total amount of data equal to or larger than the second threshold value as the compression target group so that it is possible to reduce a chance of a shortage in the free capacity of the storage unit 18.

If NO in step S206, the selection unit 14 refers to the backup management information and selects a group including a DB having the oldest reception time as a compression target group (step S208). That is to say, if NO in steps S204 and S206, any one group is selected as a compression target group in step S208, and the compressed data is transmitted in the processing described later. Accordingly, it is possible for the relay server 4 to effectively use the communication bandwidth between the relay server 4 and the backup server 5. The communication bandwidth between the first network segment 1 and the second network segment 2 is narrower, and thus it is possible to reduce a delay in a backup by effectively use the communication bandwidth between the relay server 4 and the backup server 5.

Next, a description will be given of the processing subsequent to "A" in FIG. 8 with reference to FIG. 9. The management unit 12 assigns a group ID to a group selected as a compression target and records the group ID in the backup management information (step S209).

The compression unit 15 compresses, for example, one or a plurality of DBs in the group selected by the selection unit 14 for each group (step S210). The compression unit 15 compresses one or a plurality of DBs in the group selected by the selection unit 14 so as to generate one piece of compressed data for one group.

The communication unit 11 transmits the compressed data to the backup server 5 (step S211). The control unit 19 then deletes the transmitted compressed data from the backup data area 18a (step S212).

If the relay server 4 receives a backup stop instruction (YES in step S213), the processing is terminated. For example, if abnormality occurs in the backup server 5, or the like, a backup stop instruction is transmitted from the administrator terminal to the relay server 4.

If the relay server 4 has not received a backup stop instruction (NO in step S213), the processing returns from "B" to step S201 in FIG. 8.

By the above-described processing from step S201 to S211, a plurality of DBs are classified into respective groups, and any DBs among the plurality of classified DBs are transmitted to the backup server 5. After starting transmission, if NO in step S213, the processing from step S201 to S211 is performed again. As a result, the compression unit 15 compresses one or a plurality of DBs excluding the already transmitted DBs among the plurality of data groups. The communication unit 11 then transmits one or the plurality of DBs.

That is to say, after the relay server 4 completed the transmission processing of one group, the relay server 4 performs the transmission processing of the next group so as to serialize the data transmission processing to the backup server 5. Accordingly, it is possible for the relay server 4 to smooth the load of the communication processing and the processing load of the backup server 5.

When the data storage server 3 is used by a large number of users, and backup time is set by the users, it is difficult to avoid overlapping of data transmission time periods from the data storage server 3 to the relay server 4. However, as described above, the communication bandwidth in the first network segment 1 is wider than the communication bandwidth between the first network segment 1 and the second network segment 2. Accordingly, even if the data transmission time periods from a plurality of data storage servers 3 to the relay server 4 overlap, it is possible for the relay server 4 to reduce a delay of the backup processing by avoiding overlapping of the data transmission time periods to the backup server 5.

Also, not the data storage server 3 but the relay server 4 performs compression of the backup target DBs so that it is possible to avoid an increase in the load of the Central Processing Unit (CPU) of the data storage server 3, and to increase the convenience of a user who uses the data storage server 3.

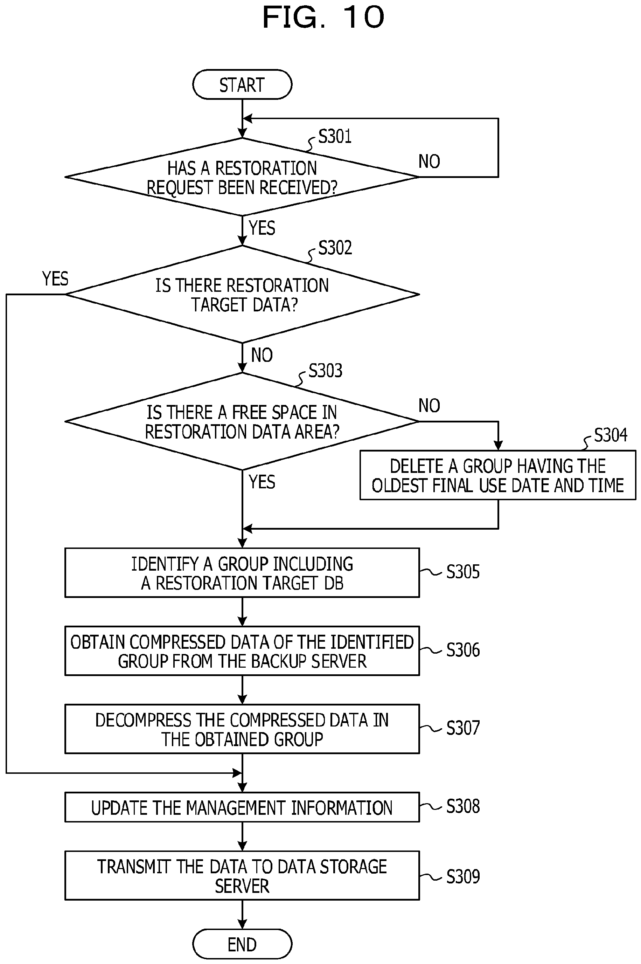

FIG. 10 is a flowchart illustrating an example of the flow of restoration processing of the relay server 4. The control unit 19 determines whether or not a restoration request has been received from the data storage server 3 (step S301). The restoration request includes, for example, a DBID of a restoration target DB or a backup ID. Also, the restoration request may include the DBIDs of a plurality of restoration target DBs or backup IDs. If the relay server 4 has not received a restoration request (NO in step S301), the processing does not proceeds to the next processing.

If YES in step S301, the control unit 19 determines whether or not restoration target data is stored in restoration data area 18b (step S302). If YES in step S302, the processing proceeds to step S308.

In this regard, if uncompressed restoration target data is stored in the backup data area 18a, the processing of the control unit 19 may proceed from step S302 to step S308. Also, if compressed restoration target data is stored in the backup data area 18a, the processing of the control unit 19 may proceed from step S302 to step S307.

If NO in step S302, the control unit 19 determines whether or not there is sufficient space in the restoration data area 18b of the storage unit 18 (step S303). For example, the control unit 19 refers to the backup management information (for example, FIG. 4) and obtains the data size of a restoration target DB corresponding to a DBID included in the restoration request. If the free capacity of the restoration data area 18b is larger than the data size of the restoration target DB, the control unit 19 determines that there is a free space in the restoration data area 18b in step S303.

If NO in step S303, the control unit 19 refers to the restoration management information (for example, FIG. 6) and deletes the DBs in a group having the oldest final use date and time (step S304). Also, the management unit 12 deletes the information on the deleted group from the restoration management information.

In this regard, in step S304, the control unit 19 may delete a DB having the oldest final use date and time. That is to say, the control unit 19 may delete for each DB rather than for each group.

For example, if abnormality occurs in the data storage server 3, there is a high possibility that a restoration request of the DBs stored in the data storage server 3 is transmitted more than once in a short period of time. However, there is a low possibility that a DB having old final use date and time becomes a restoration target again, and thus the control unit 19 preferentially deletes the DBs in a group having old final use date and time in step S304.

Also, the control unit 19 may preferentially delete a DB in a group having the oldest date and time obtained from the backup server 5. That is to say, the control unit 19 applies Least Recently Used (LRU) as a method of deleting the compressed data in the processing in step S304, but the control unit 19 may apply First In, First Out (FIFO).

If YES in step S303, the identification unit 16 refers to the backup management information and identifies a group including a restoration target DB (step S305). The identification unit 16 refers to the backup management information and identifies a group (group ID) associated with a DBID included in the restoration request.

The decompression unit 17 obtains compressed data associated with the group identified by the identification unit 16 from the backup server 5 (step S306). The decompression unit 17 transmits, for example, an acquisition request of the compressed data including the group ID identified by the identification unit 16 to the backup server 5 via the communication unit 11. The communication unit 11 then receives the compressed data associated with the group identified by the identification unit 16 from the backup server 5.

The decompression unit 17 decompresses the obtained compressed data (step S307). The decompression unit 17 then stores a restoration target DB obtained by decompressing the compressed data in the restoration data area 18b of the storage unit 18.

The management unit 12 updates the restoration management information (step S308). The management unit 12 records, for example, the group ID of a group corresponding to the decompressed compressed data and the final use date and time in the restoration management information.

The communication unit 11 transmits the decompressed restoration target DB to the data storage server 3, which is the transmission source of the restoration request (step S309).

In this regard, in the above-described processing, the relay server 4 receives a restoration request from the data storage server 3 and transmits the restoration target DB to the data storage server 3, which is the transmission source of the restoration request. However, the present disclosure is not limited to such an example. For example, if a failure has occurred in the data storage server 3, it is possible that the relay server 4 receives a restoration request from the management terminal that manages the data storage server 3, or the like. In that case, the relay server 4 may transmit the restoration target DB to an alternative server of the data storage server 3, which is specified in the restoration request.

Also, the relay server 4 rather than the data storage server 3 decompresses the restoration target DB so that it is possible to avoid an increase in the load of the CPU of the data storage server 3 and to improve the convenience of a user who uses the data storage server 3.

As described above, the relay server 4 classifies backup target DBs into respective groups for each data storage server 3 and compresses the backup target DBs in the backup processing and transmits the compressed data to the backup server 5. Also, in the case where a failure occurs in the data storage server 3, there is a high possibility that a failure occurs for each data storage server 3, and thus there is a high possibility that a restoration request is transmitted for each data storage server 3. Accordingly, it is possible for the relay server 4 to reduce decompression of the compressed data that is not the decompression target when the relay server 4 decompresses the compressed DB at the time of restoration processing and to reduce the amount of decompression processing. Also, it is possible for the relay server 4 to reduce the amount of data communication from the backup server 5 to the relay server 4 in the restoration processing.

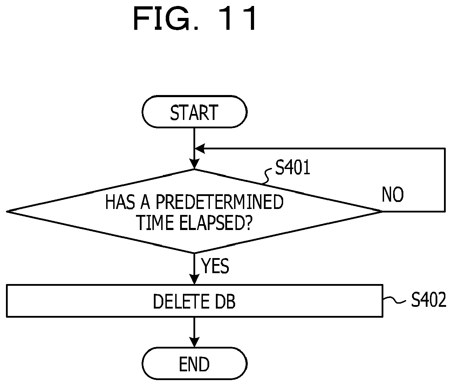

FIG. 11 is a flowchart illustrating an example of the flow of deletion processing of a DB in a restoration data area. The processing illustrated in FIG. 11 is performed for each DB of a restoration target in the restoration area or for each group.

The deletion processing unit 20 determines whether or not a predetermined period of time has elapsed from transmission of a restoration target DB to the data storage server 3 (step S401). If a predetermined period of time has not elapsed (NO in step S401), the processing does not proceed to the next step.

If YES in step S401, the deletion processing unit 20 deletes the restoration target DB (step S402).

In this regard, if the processing in FIG. 11 is performed for each group, the deletion processing unit 20 may determine whether or not a predetermined period of time has elapsed from the transmission for each group in step S401 and may delete all the DBs in the group in step S402.

For example, if a failure occurs in the data storage server 3, a plurality of restoration requests for the same DB in the data storage server 3 are sometimes transmitted in a short period of time. In that case, if the relay server 4 does not delete the restoration target DB immediately after the transmission and holds the restoration target DB for a predetermined period of time, the relay server 4 does not have to receive the compressed data from the backup server 5 once again and perform decompression processing, and thus it is possible to make the restoration processing more efficient.

### <Application example of the relay server 4 according to an embodiment

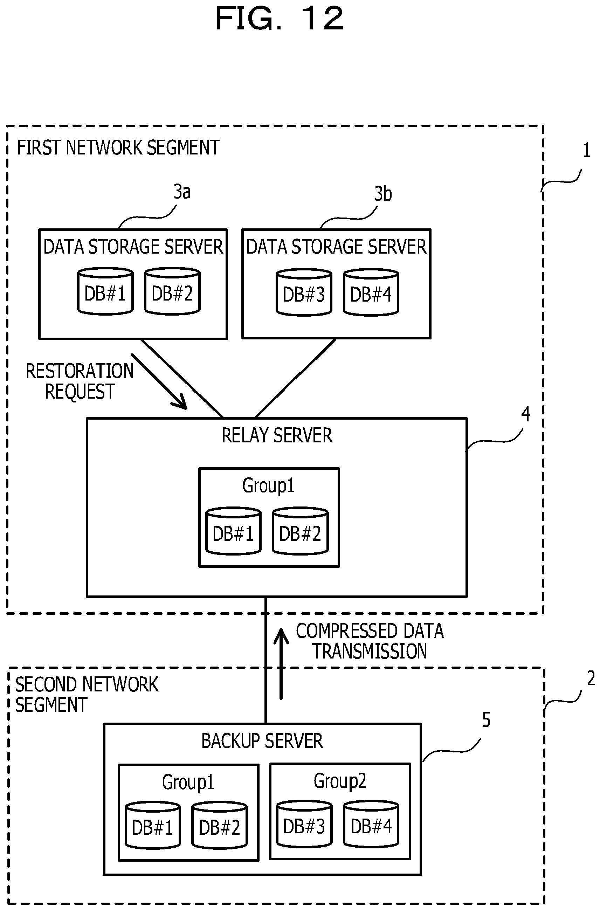

FIG. 12 is a diagram illustrating an application example of the relay server 4 according to the embodiment. In FIG. 12, a description will be omitted of the same configuration as that in FIG. 1. A data storage server 3a and a data storage server 3b correspond to the data storage servers 3 in FIG. 1. The data storage server 3a stores DB#1 and DB#2. The data storage server 3b stores DB#3 and DB#4.

The relay server 4 receives DB#1, DB#2, DB#3, and DB#4 in the backup processing and classifies the DBs into respective groups for individual data storage servers 3, compresses the DBs for individual groups and transmits the groups to the backup server 5. In this example, it is assumed that GROUP1 includes DB#1 and DB#2, and GROUP2 includes DB#3 and DB#4 as a result of the backup processing performed by the relay server 4.

It is assumed that after the backup processing, a failure has occurred in the data storage server 3a, and the relay server 4 has received a restoration request that specifies DB#1 and DB#2 from the data storage server 3a. The relay server 4 obtains compressed data corresponding to GROUP1 from the backup server 5 in order to restore DB#1 and DB#2.

In this example, DB#3 and DB#4 are not the restoration target DB, and thus the relay server 4 does not obtain and decompress GROUP2 including DB#3 and DB#4. That is to say, the relay server 4 in this example does not transfer and decompress the DBs that are not restoration targets (decompression targets), and thus it is possible to reduce the amount of decompression processing and the amount of communication.

### <Example of the hardware configuration of relay server >

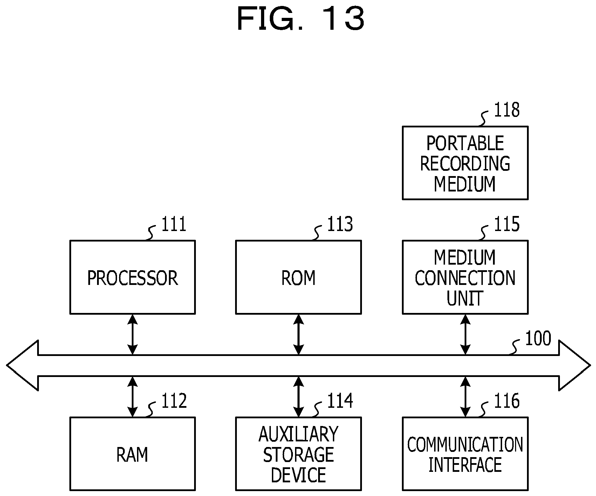

Next, a description will be given of an example of the hardware configuration of the relay server 4 with reference to the example in FIG. 13. As illustrated by the example in FIG. 13, a processor 111, a Random Access Memory (RAM) 112, and a Read Only Memory (ROM) 113 are connected to a bus 100. Also, an auxiliary storage device 114, a medium connection unit 115, and a communication interface 116 are connected to the bus 100.

The processor 111 executes a program loaded into the RAM 112. For the program to be executed, a control program for performing the processing according to the embodiment may be applied.

The ROM 113 is a nonvolatile storage device that stores the program to be loaded into the RAM 112. The auxiliary storage device 114 is a storage device that stores various kinds of information and, for example, a hard disk drive, a semiconductor memory, or the like may be applied to the auxiliary storage device 114. The auxiliary storage device 114 may record the control program that performs the processing according to the embodiment. The medium connection unit 115 is disposed in a connectable manner with the portable recording medium 118.

A portable memory, an optical disc (for example, a Compact Disc (CD) and a Digital Versatile Disc (DVD)), a semiconductor memory, or the like may be applied to the portable recording medium 118. The portable recording medium 118 may record the control program that performs the processing according to the embodiment.

The storage unit 18 illustrated in FIG. 3 may be realized by the RAM 112, the auxiliary storage device 114, or the like. The communication unit 11 illustrated in FIG. 3 may be realized by the communication interface 116. The management unit 12, the classification unit 13, the selection unit 14, the compression unit 15, the identification unit 16, the decompression unit 17, and the control unit 19, which are illustrated in FIG. 3, may be realized by execution of the given control program by the processor 111.

The RAM 112, the ROM 113, the auxiliary storage device 114, and the portable recording medium 118 are all the examples of computer-readable tangible recording media. These recording media are not temporary media, such as a signal carrier.

### <Others>

The present embodiment is not limited to the embodiments described above, and various configurations or embodiments are possible without departing from the spirit and scope of the present embodiment.

### [Reference Numerals]

1 first network segment
2 second network segment
3 data storage server
4 relay server
5 backup server
11 communication unit
12 management unit
13 classification unit
14 selection unit
15 compression unit
16 identification unit
17 decompression unit
18 storage unit
19 control unit
20 deletion processing unit
111 processor
112 RAM
113 ROM

## Claims

1. A backup control method executed by a computer, the method comprising:
receiving a plurality of pieces of data transmitted from a plurality of data storage devices;
classifying the plurality of pieces of data into respective data groups in accordance with the plurality of data storage devices of transmission sources;
generating first compressed data by compressing one or more pieces of data classified into a first data group; and
transmitting the first compressed data to a backup device storing backups.

2. The backup control method according to claim 1, further comprising:
receiving a restoration request from a first data storage device relating to the first data group;
obtaining, from the backup device, the first compressed data associated with the first data group from among the respective data groups;
generating the one or more pieces of data by decompressing the first compressed data; and
transmitting the one or more pieces of data to the first data storage device.

3. The backup control method according to claim 1, further comprising:
after the transmitting the first compressed data, generating a second compressed data by compressing one or more pieces of data classified into a second data group, and
transmitting the second compressed data to the backup device.

4. The backup control method according to claim 1, further comprising: among the plurality of data groups generated by the classifying, when presence of a group having a number of pieces of data no less than a threshold value is detected, determining a data group having the largest number of pieces of data among the plurality of data groups to be a target of compression processing.

5. The backup control method according to claim 1, further comprising: among the plurality of data groups generated by the classifying, when presence of a group having an amount of data no less than a threshold value is detected, determining a data group having the largest amount of data among the plurality of data groups to be a target of compression processing.

6. The backup control method according to claim 1, further comprising:
when a restoration request is received from a first data storage device,
obtaining compressed data related to the restoration request from the backup device,
generating another one or more pieces of data by decompressing the obtained compressed data; and
transmitting the other one or more pieces of data to the first data storage device; and
when a predetermined time period has passed from the transmitting of the other one or more pieces of data, deleting the other one or more pieces of data stored in the computer.

7. A backup control device comprising:
a processor configured to:
receive a plurality of pieces of data transmitted from a plurality of data storage devices,
perform classification of the plurality of pieces of data into respective data groups in accordance with the plurality of data storage devices of transmission sources,
generate first compressed data by compressing one or more pieces of data classified into a first data group, and
perform transmission of the first compressed data to a backup device storing backups.

8. The backup control device according to claim 7, the processor further configured to:
receive a restoration request from a first data storage device relating to the first data group,
obtain, from the backup device, the first compressed data associated with the first data group from among the respective data groups,
generate the one or more pieces of data by decompressing the first compressed data, and
transmit the one or more pieces of data to the first data storage device.

9. The backup control device according to claim 7, the processor further configured to:
after the transmission of the first compressed data, generate a second compressed data by compressing one or more pieces of data classified into a second data group, and
transmit the second compressed data to the backup device.

10. The backup control device according to claim 7, the processor further configured to: among the plurality of data groups generated by the classification, when presence of a group having a number of pieces of data no less than a threshold value is detected, determine a data group having the largest number of pieces of data among the plurality of data groups to be a target of compression processing.

11. The backup control device according to claim 7, the processor further configured to: among the plurality of data groups generated by the classification, when presence of a group having an amount of data no less than a threshold value is detected, determine a data group having the largest amount of data among the plurality of data groups to be a target of compression processing.

12. The backup control device according to claim 7, the processor further configured to:
when a restoration request is received from a first data storage device,
obtain compressed data related to the restoration request from the backup device,
generate another one or more pieces of data by decompressing the obtained compressed data; and
transmit the other one or more pieces of data to the first data storage device; and
when a predetermined time period has passed from the transmitting of the other one or more pieces of data, delete the other one or more pieces of data stored in the computer.

13. A non-transitory computer-readable medium storing a backup control program that causes a computer to execute a process comprising:
receiving a plurality of pieces of data transmitted from a plurality of data storage devices;
classifying the plurality of pieces of data into respective data groups in accordance with the plurality of data storage devices of transmission sources;
generating first compressed data by compressing one or more pieces of data classified into a first data group; and
transmitting the first compressed data to a backup device storing backups.
